# EUROPEAN PATENT APPLICATION

(11) **EP 1 094 413 A2**
(43) Date of publication of application: **25.04.2001**
(21) Application number: 00109184.2
(22) Date of filing: 09.05.2000
(51) Int. Cl.: G06F 17/60

(54) **Internet based advertising system**

(30) Priority: 19.10.1999 KR 4535299
(71) Applicant: Yu, Eun YOung, Kangnam-ku, Seoul (KR)
(72) Inventor: Yu, Eun YOung, Kangnam-ku, Seoul (KR)
(74) Representative: von Hellfeld, Axel, Dr. Dipl.-Phys.

(57) **Abstract**

The present invention relates to an advertising system that does not require a banner space in the advertiser's homepage, more particularly to an advertising technique that constantly senses the user's browsing behavior to calculate the predetermined time until it starts displaying the advertisement on the entire browser screen. The displayed advertisement is removed upon the user's mouse movement and the user will view the original homepage again, or the user may connect to a designated site from the advertisement.

## Description

### BACKGROUND OF THE INVENTION

### 1. Field of the Invention

The present invention relates to an Internet based advertising system, more particularly to an Internet based advertising algorithm which is embedded to a homepage as a program code that functions inside a browser as a normal html format depending on user's usage interval.

### 2. Description of the Background Art

Since the use of Internet banner advertisements has great commercial value, most Internet homepages host banner advertisements to attract viewers which may be composed of image files (*.jpg, *.gif, for example) or animated images that contain a link to the advertiser's homepage. For example, USA Today (www.usatoday.com), a newspaper company, has about 20 banner advertisements in its front page, and its sub-pages also contain several banner advertisements. The viewers at such homepage are presented with 20 or more banner advertisements that can cause the decrease of reader's concentration. The advertiser's banners are placed in selection competition among other banners and an advertiser can only passively hope that the viewer will select one of their banners. The homepage owner must allocate great amount of space by hosting the banners, which will reduce its own homepage space.

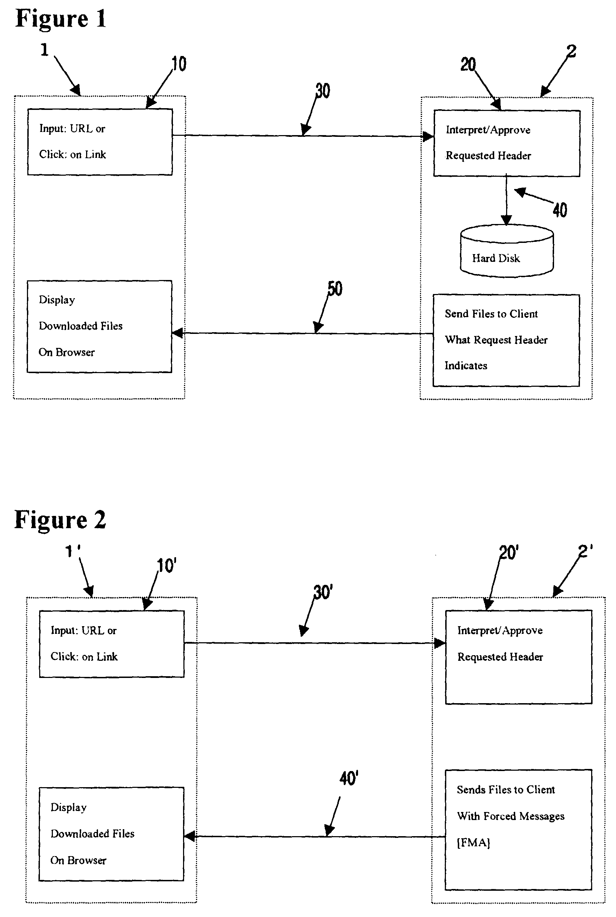

Figure 1 depicts a general diagram in making client's connection to a homepage. In the figure, a client (an internet user) writes a specific URL or clicks to a link 10 in the Web browser 1. The browser 1 then generates a request header and sends it 30 to the server 2. The server 2 interprets the client's requests and asks for approval 20. If they are approved, the server accesses the hard disk 40 and starts sending files to the Web browser where the request has originated 50. Next, if these files are received on the browser, the browser starts displaying the homepages.

Advertising in Internet usually takes the form of allocating certain banner spaces in the homepages and waiting for a user's connection request through the banners. Therefore, banners at homepages employ many kinds of fancy techniques such as animation or changing phrases as an anchor to attract Internet viewers. Certain homepages host the same advertising banner in the exact same position in all its sub homepages for advertising repetition effect to maximize the advertisement efficiency.

The current Internet homepage based advertising has four major problems. First, it always associates with banners where their size are limited. With the limited banner size, advertisers find difficulties in fully expressing their advertisement phrases. Second, the homepage space is reduced when the advertisers' banners are hosted. Third, the simultaneous display of several banners cause contention and selection competition among banners which will confuse the viewers. Fourth, the viewer departs from homepage to a advertiser's homepage in case of a banner selection by a viewer.

It would be desirable for homepage owners who host advertisement if there is an advertising mean that does not need a banner or banner space on a homepage while allowing full browser sized advertisement opportunities without disturbing a user's homepage viewing process. It would be particularly useful if the advertisement displaying time harmonizes with user's browsing behavior while the advertisement itself contain a link to the sponsor's homepage.

### SUMMARY OF THE INVENTION

The primary object of the present invention is to provide an Internet based advertising system which will eliminate the above described problems encountered in the conventional art. If an Internet World Wide Web user connects to a specific homepage, the user is associated with normal browsing activities such as a mouse click or keyboard press to navigate or read the contents of that homepage. The present invention supplements an original homepage by implicitly providing advertisement during a user's normal viewing process. In the present invention, the system constantly monitors for a user's end of mouse movement within a browser, and constantly tests if the time from a user's end of mouse movement has reached a predetermined period to qualify for fully or partially covering the original homepage with advertisement. As a result, advertisers can intensify their advertisement by using the whole browser window space for their advertising with bigger images, lengthier texts, and moving images that will create more dynamic and effective advertisement than any other methods in the current market. According to the present invention, there are benefits for three parties, the advertisers, the homepage owners, and the viewers. The advertisers will find a way to resolve problems in attracting users with limited banner size and find an opportunity to enlarge their advertising area for their advertisement phrases or images. The homepage owners will have advantages by placing advertisement without allocating certain space for banners that is normally required. The advertisement viewers will find a way to minimize any confusion that may be a result by simultaneously viewing several banners that are displayed together at one homepage.

To achieve the above benefits of web based advertising on the Internet, the system of the present invention has at least one web server and a browser for providing information in response to a request from a user. The algorithm of the present invention which is embedded into web server's content (homepage) includes three stages, the advertisement activating stage, the advertisement terminating stage, and the modified advertisement activating stage which itself contains a link to a sponsor's homepage. The advertisement activating stage starts during a user's normal browsing process in the browser when no event, such as a mouse input, is captured for a predetermined time period. It covers the original homepage that a user is currently viewing with the advertisement phrases (including image files). The advertising activating stage changes to an advertising terminating stage, which will remove the advertisement so that the user can view the original homepage, when an event, such as a mouse move, is sensed from the user. During the advertising activating stage, the user can be moved to the advertiser's homepage by an event, such as, a user's keyboard press.

The system of the present invention is embedded in a normal homepage(server) and operates inside a browser(client). This advertisement mechanism does not disturb a user's normal browsing behavior since the system will guarantee sufficient time for users to read the homepage until the advertisement starts operating. Moreover, the operating advertisement will be removed right after the user's intention for viewing the original homepage. Users do not perceive the presence of the mechanism, instead the viewers will find themselves in a full screen of advertisement while they are still in the homepage if they do not move the mouse for a certain period.

### BRIEF DESCRIPTION OF THE DRAWINGS

Figure 1 shows a general concept of how a client accesses an Internet homepage.
Figure 2 shows the communication of the present invention between a client and a server in an Internet environment.
Figure 3 is a block diagram (algorithm) of a forced message transmission and display system in accordance with the embodiment of the present invention.
Figure 4 shows mechanism of displaying and removing an advertisement in accordance with the present invention.
Figures 5a to 5c show the actual working scenario in accordance with the present invention.

### DETAILED DESCRIPTION OF THE PREFERRED EMBODIMENTS

According to the present invention, an Internet based advertising system comprising: a web browser connecting to a website; and, a web server of the website which sends an ordinary homepage file and a forced message to the user's browser without the user's request when a user connects to the website, wherein the forced message is being capable of monitoring whether the time from a user's last mouse move or keyboard press has reached a predetermined period, after a user connects to the website on the Internet; displaying an advertisement content on the homepage, if the time exceeds the predetermined period; monitoring whether an event occurs during the displaying; and, terminating the displaying when an event occurs by the user.

The forced message (FM) can be referred to advertisement message in the present invention that is embedded to the original html format since the advertisement message will start displaying without the user's consent. Its logic that controls FM is called as forced message algorithm (FMA). Therefore, a server sends FM and FMA to a client system (to a web browser) along with the homepage files that the user has requested. Hereinafter, FM will be referred as both of FM and FMA above.

The forced message is capable of removing the displaying advertisement when an event occurs by the user, so that the user can view the original web site. The event may be a mouse movement, a mouse click, or a keyboard press.

The advertisement content may be a text, image, animated image, sound, and/or shockwave files, and may appear or disappear in random fashion, or may stay stationary or move to a certain direction in the user's browser.

In case the advertisement content designates another website, the forced message is capable of removing the advertisement and moving the user to a designated website, when an event occurs by the user. The advertisement content may be displayed regardless of the size of the activated current browser window or the state of the browser such as a scrolled state of the website or a background state(minimized state) of the browser window.

The forced message is being capable of displaying a background screen on the homepage and an advertisement content on the background screen in a part of the browser window or in the entire browser window, if the time exceeds the predetermined period. The advertisement content may cover the entire background screen or a part of the background screen. When an event occurs by the user, the forced message is capable of terminating the displaying, of removing the background screen and the advertisement, and of redisplaying to the original web site. In case the advertisement content designates another website, the forced message is capable of removing the background screen and the advertisement and moving the user to a designated website, when an event occurs by the user. The background screen may be displayed regardless of the size of the activated browser window or the state of the browser such as a scrolled state of the website and a background state of the browser window and can contain text based advertisement phrases or image based advertisement.

Figure 2 is a diagram of a client and a Web server communication to show the difference between the conventional communication of figure 1 and the communication of the present invention. In figure 2, an user writes a specific URL or clicks to a link 10' on the homepage from a user's browser 1'. The browser 1' then generates a request header and sends it 30' to the server 2'. The server 2' interprets the client's requests and asks for approval 20'. If they are approved, the server accesses the hard disk and starts sending the homepage files together with the forced message algorithm (FMA) which contains the forced messages (FM) and its functioning logic to the Web browser where the request is originated 40'. Next, if these files are received on the browser, the browser 1' starts displaying the homepages with the hidden forced message algorithm (FMA).

The downloaded forced message algorithm constantly operates until the end of the homepage session. The FMA keeps counting until the predetermined period has been reached starting from the last mouse movement or keyboard press from the user, and keeps measuring the current browser window size. The downloaded FMA starts presenting the forced message according to the client's browser window size if the predetermined period has been reached. The FMA also controls the removal of the forced messages if an event occurs from the user again.

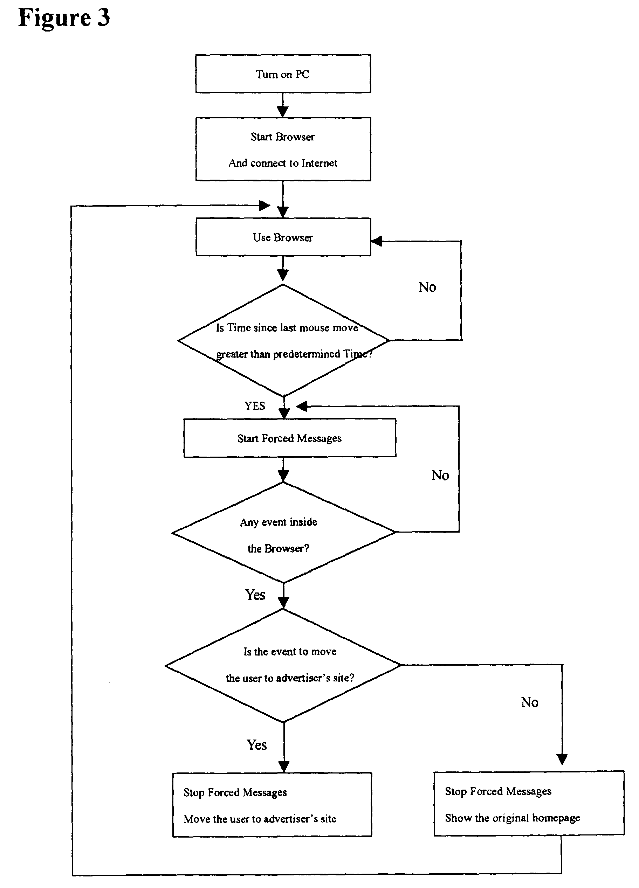

Figure 3 shows the block diagram of the embodiment of the present invention. In figure 3, a user turns the PC on and starts accessing the Internet with a browser. During the normal use of the browser, the FMA constantly monitors whether the time from user's last mouse movement has reached the predetermined period (user's usage interval monitoring). If the time exceeds the predetermined period, the FMA starts covering the original homepage with background screen. An advertisement (forced message) will be displayed above the background screen (forced message displaying). During the display time of the advertisement, the FMA monitors the user's state (capturing the user's event type). If no user's events are captured, forced messages will continue to be displayed. On the contrary, if a user's keyboard press is sensed, the forced messages will be removed and the user will be moved to a designated web site (new connection building). Further, if the FMA senses a new mouse movement during the forced message displaying time, the forced messages will be removed and the user will be displayed with the original homepage for normal browsing (returning the original homepage).

The above sequence can be explained with figure 2 in user's perspectives. As long as the user stays connected to a homepage and does not move the mouse for a certain period, the forced messages will be displayed in the browser.

An example of the program code enabling the FMA is shown below.

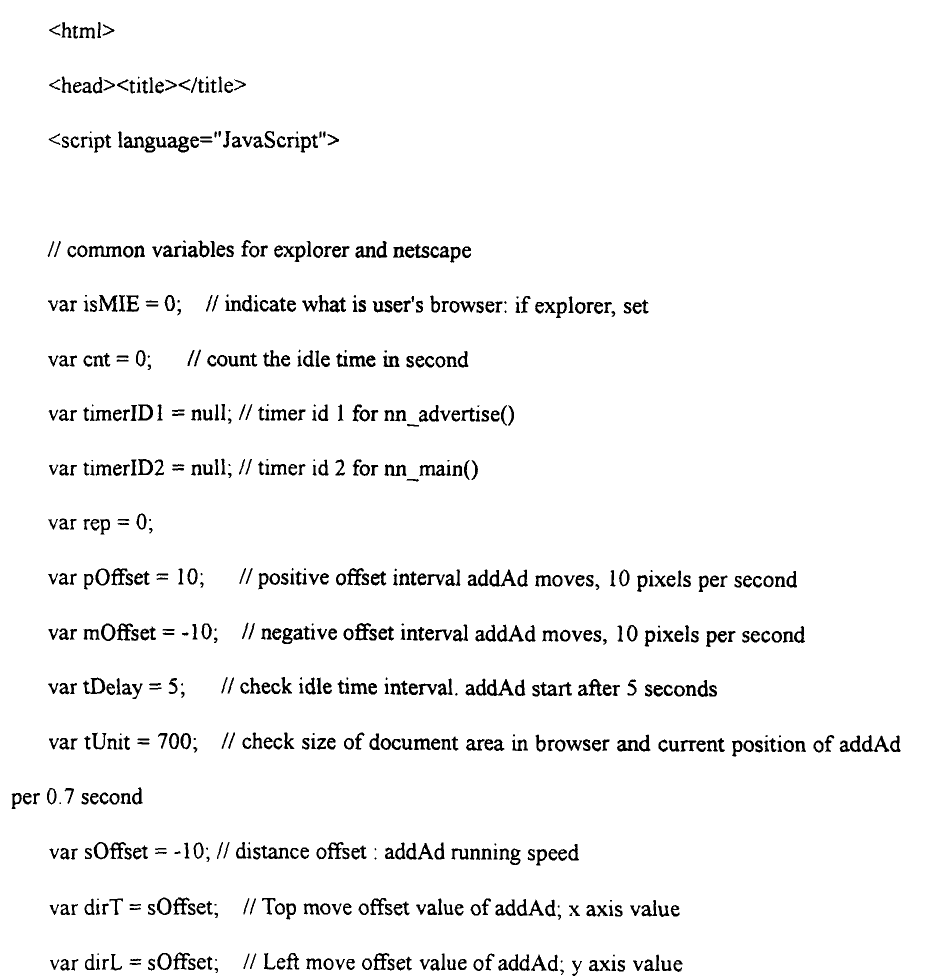

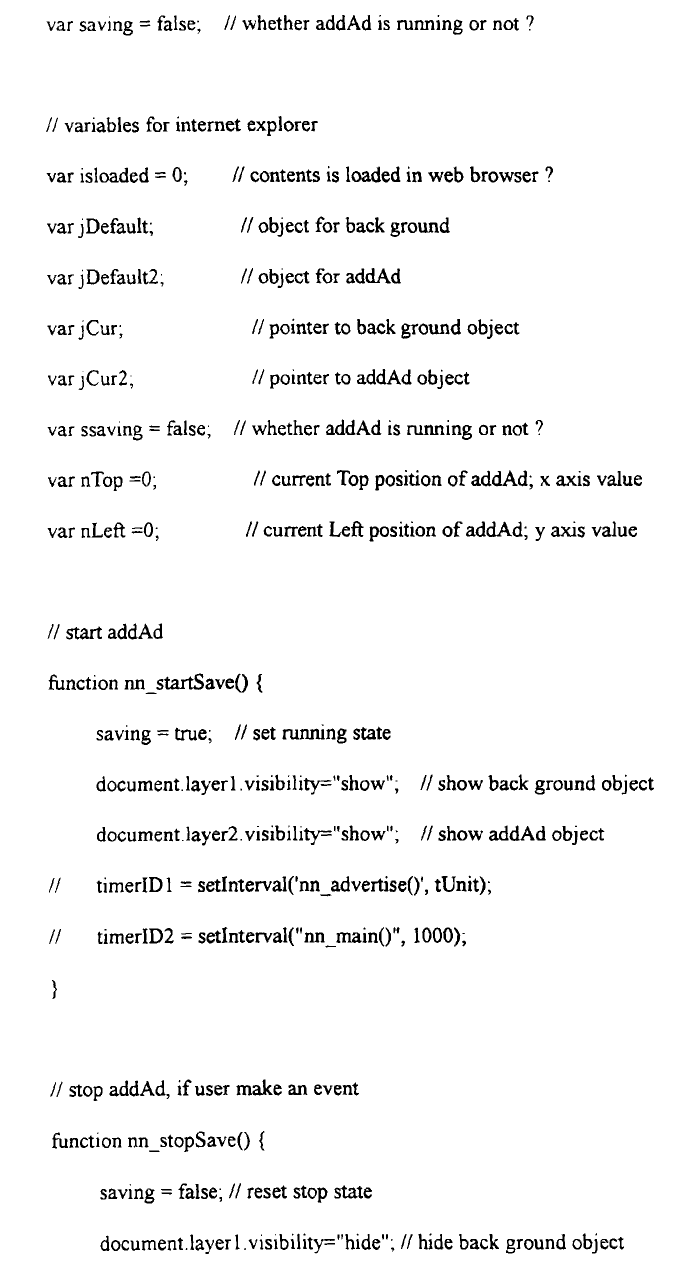

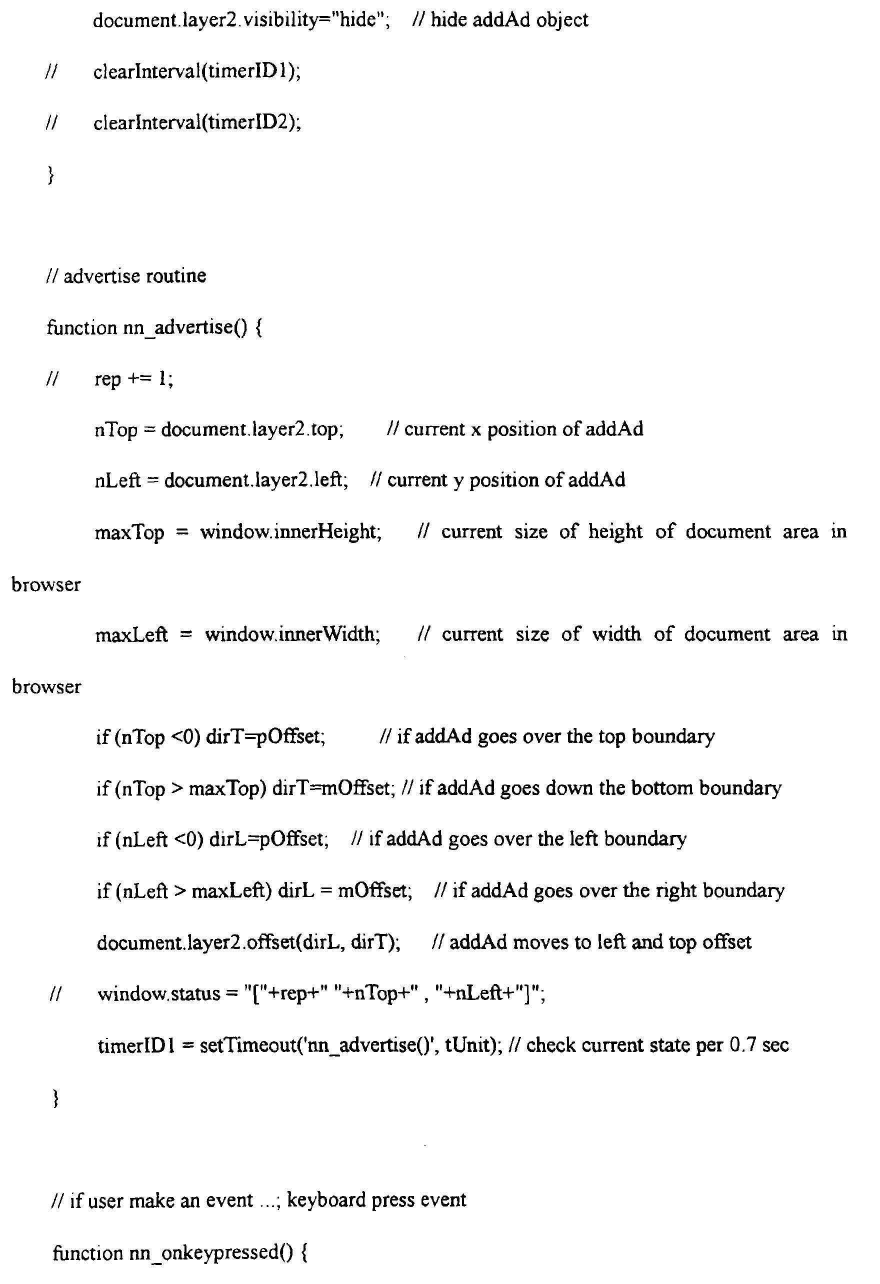

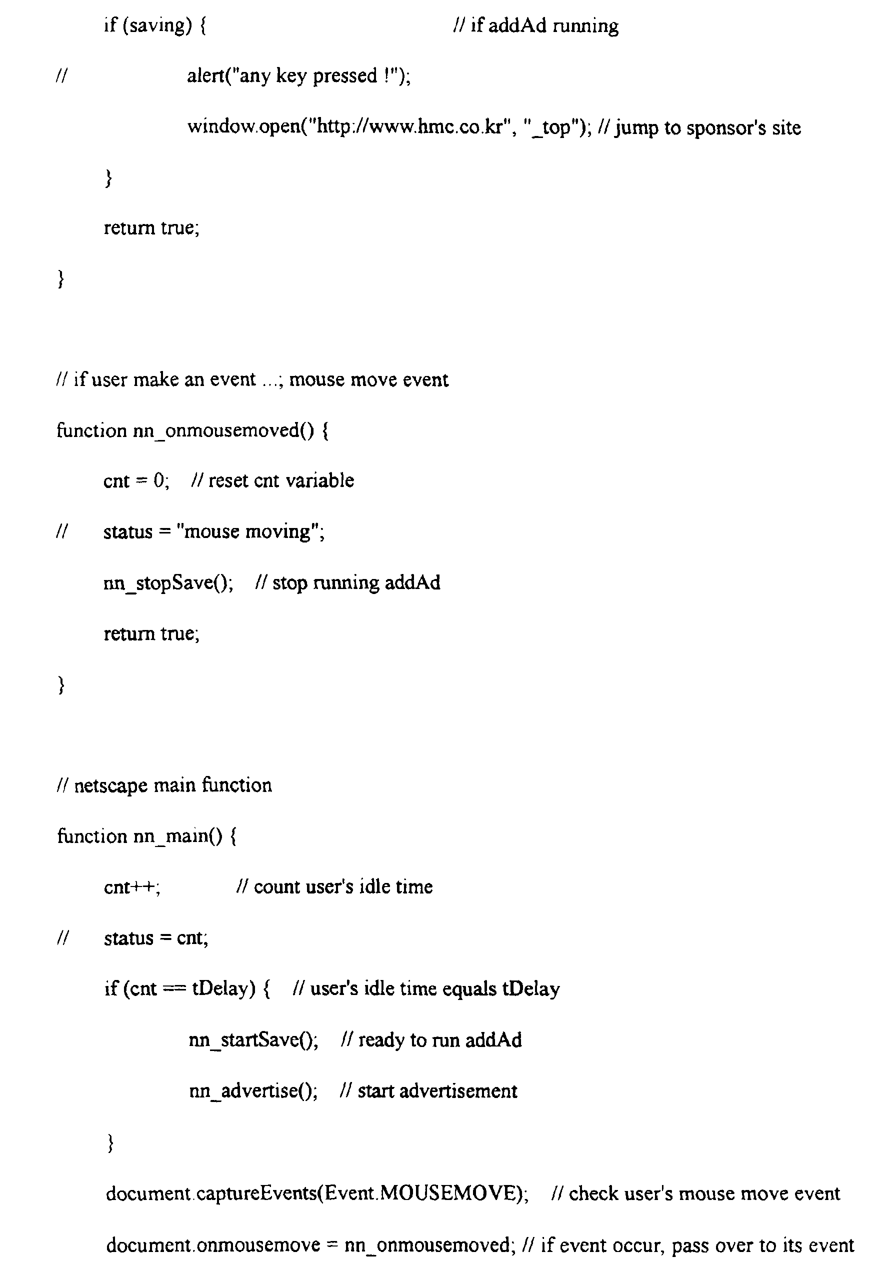

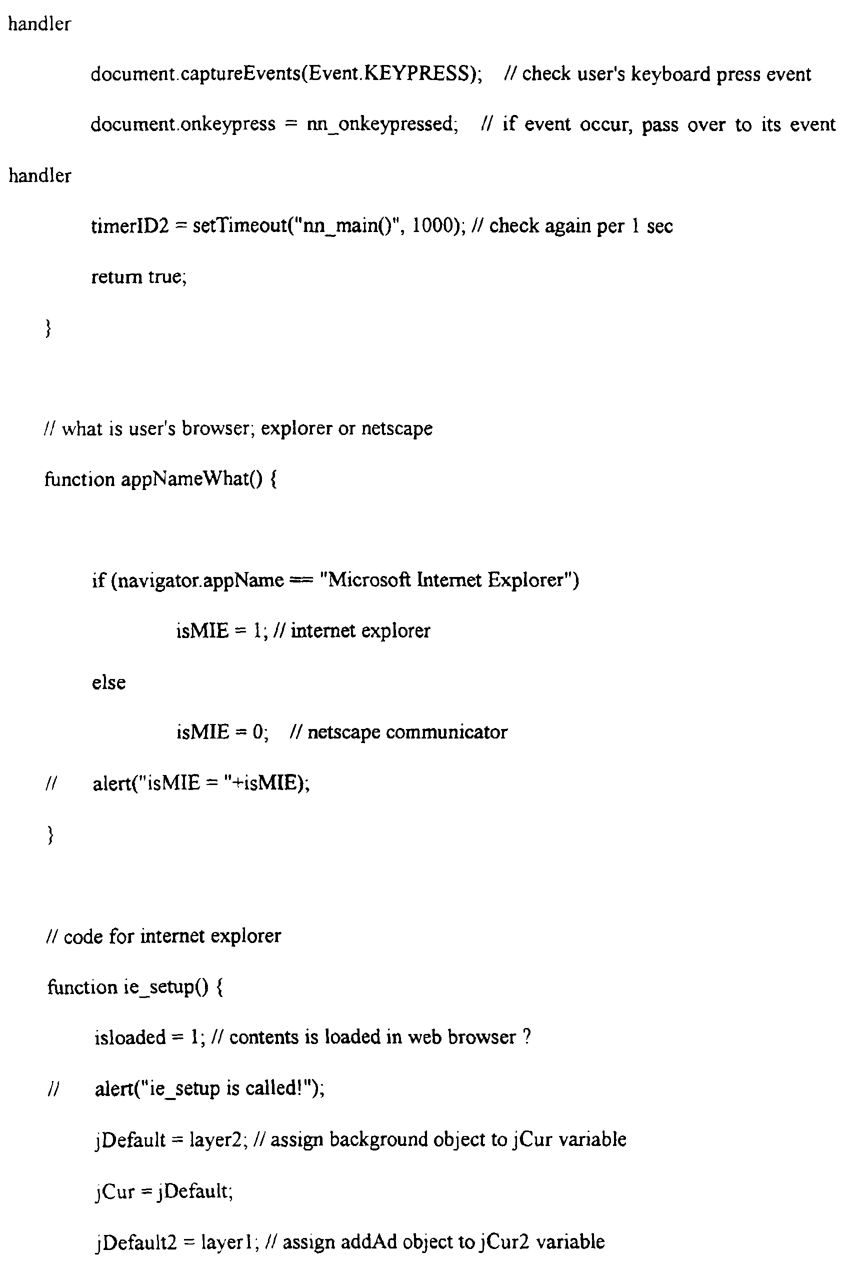

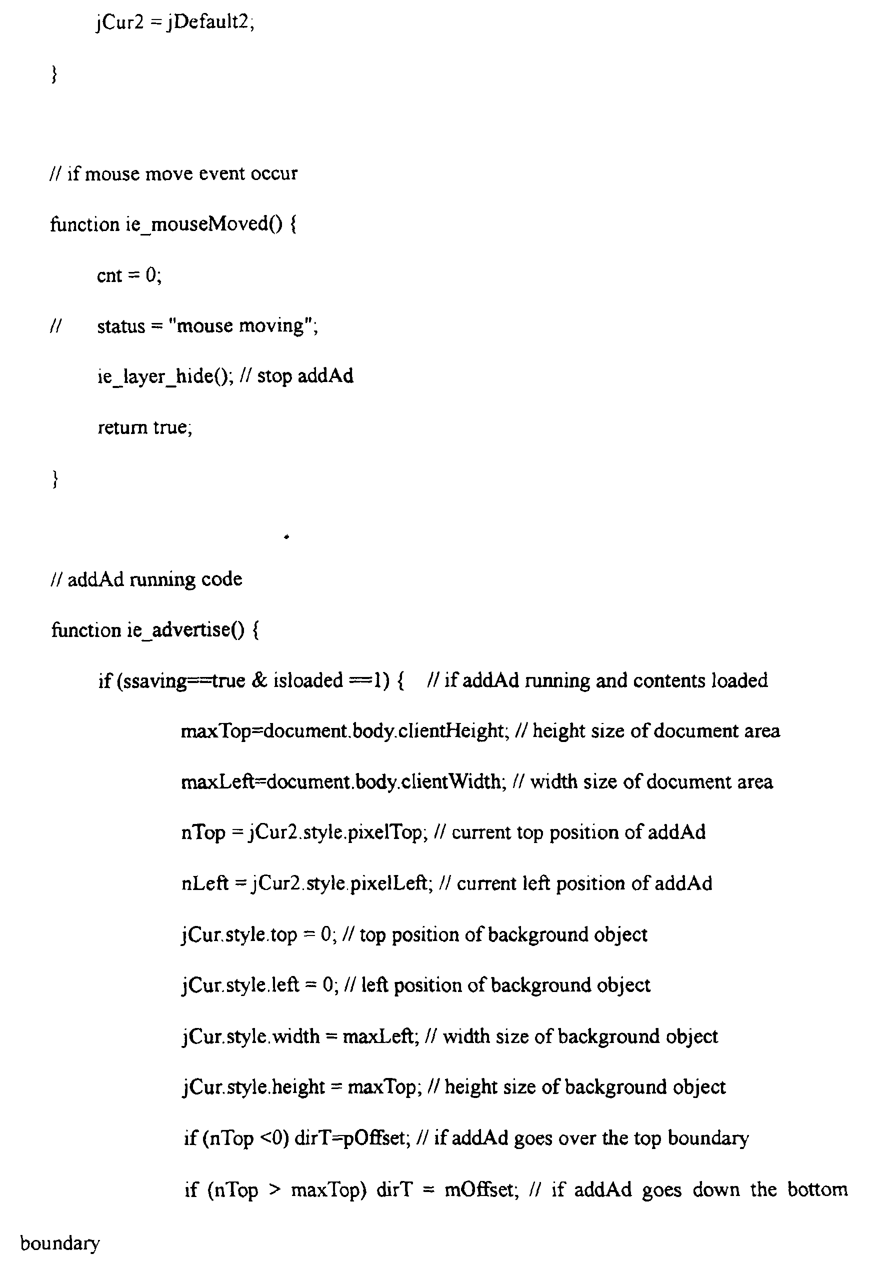

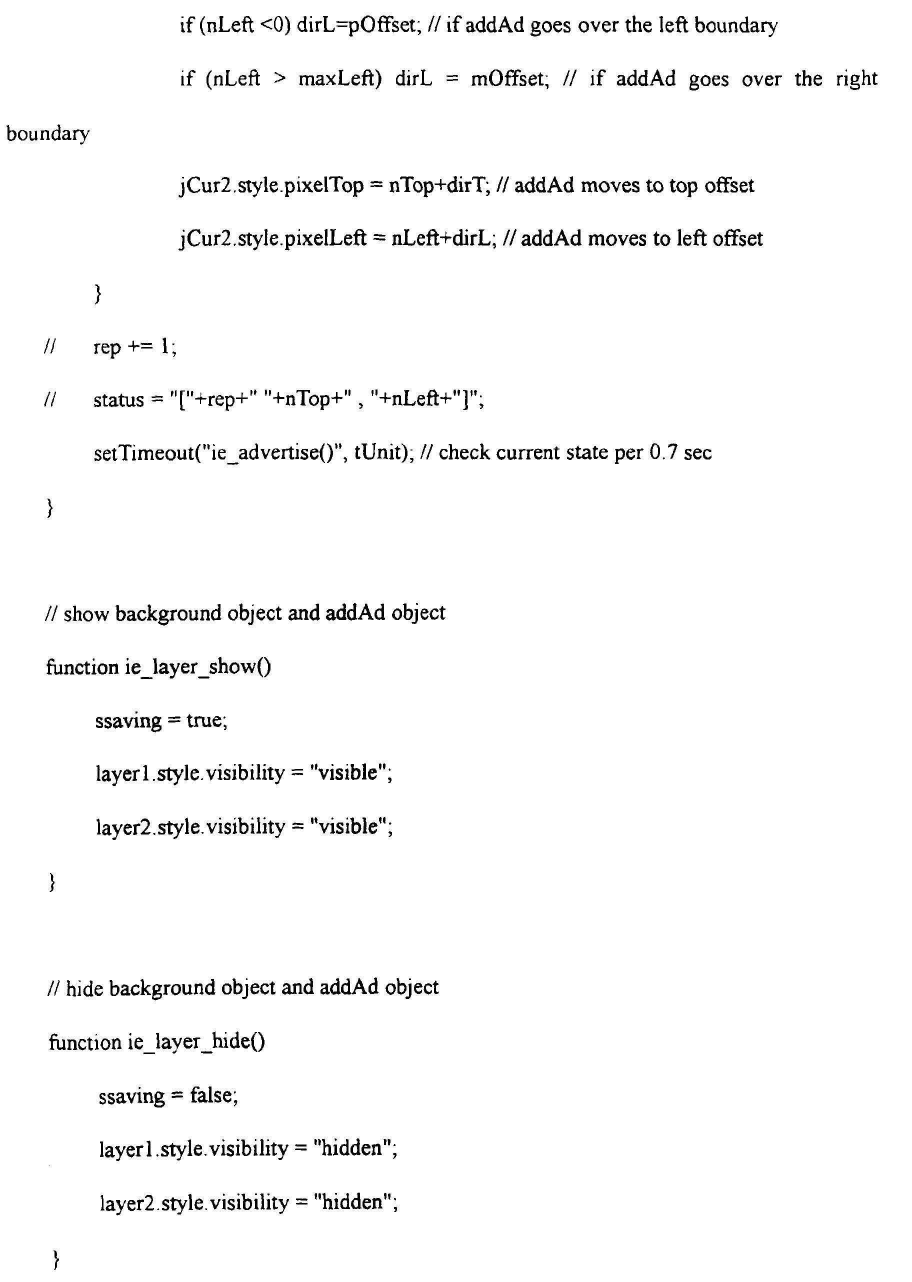

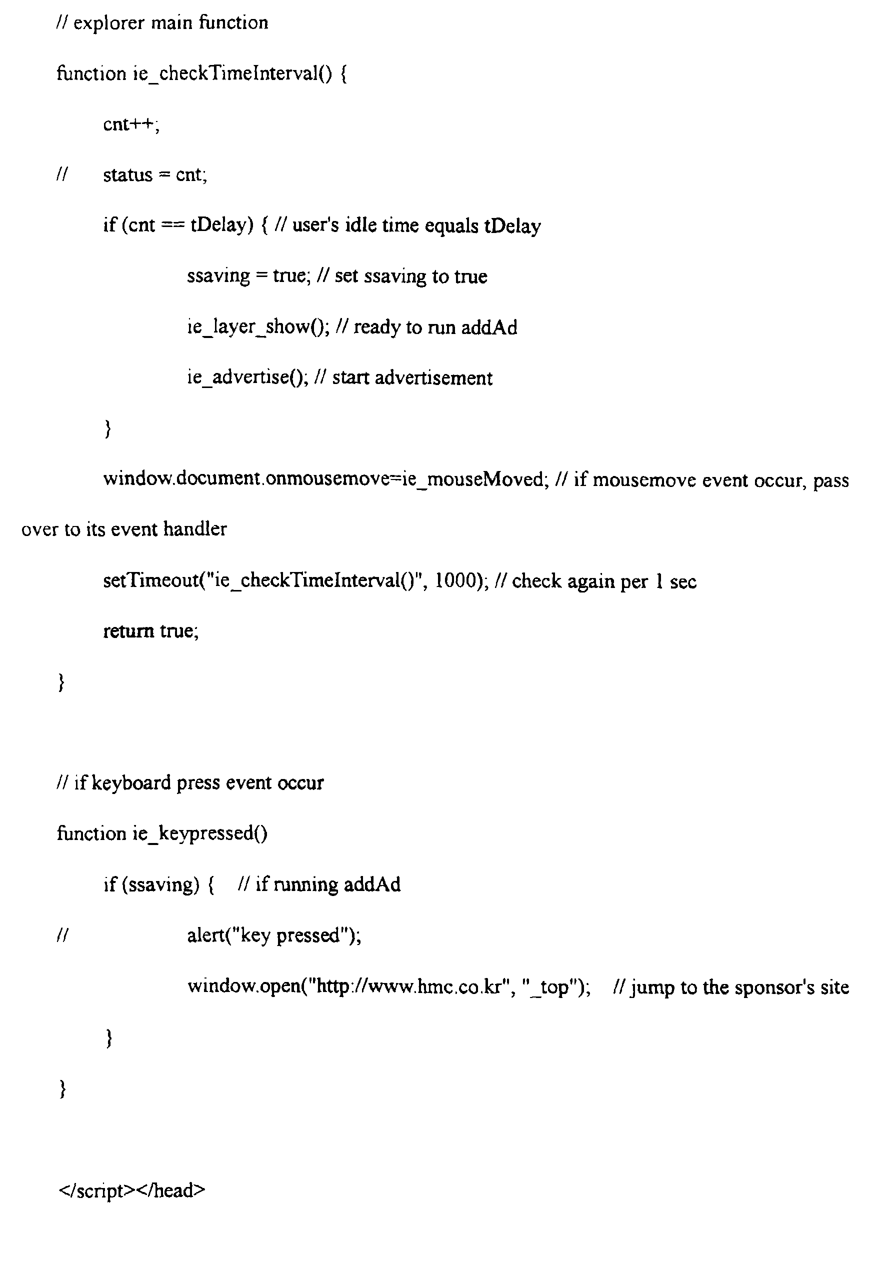

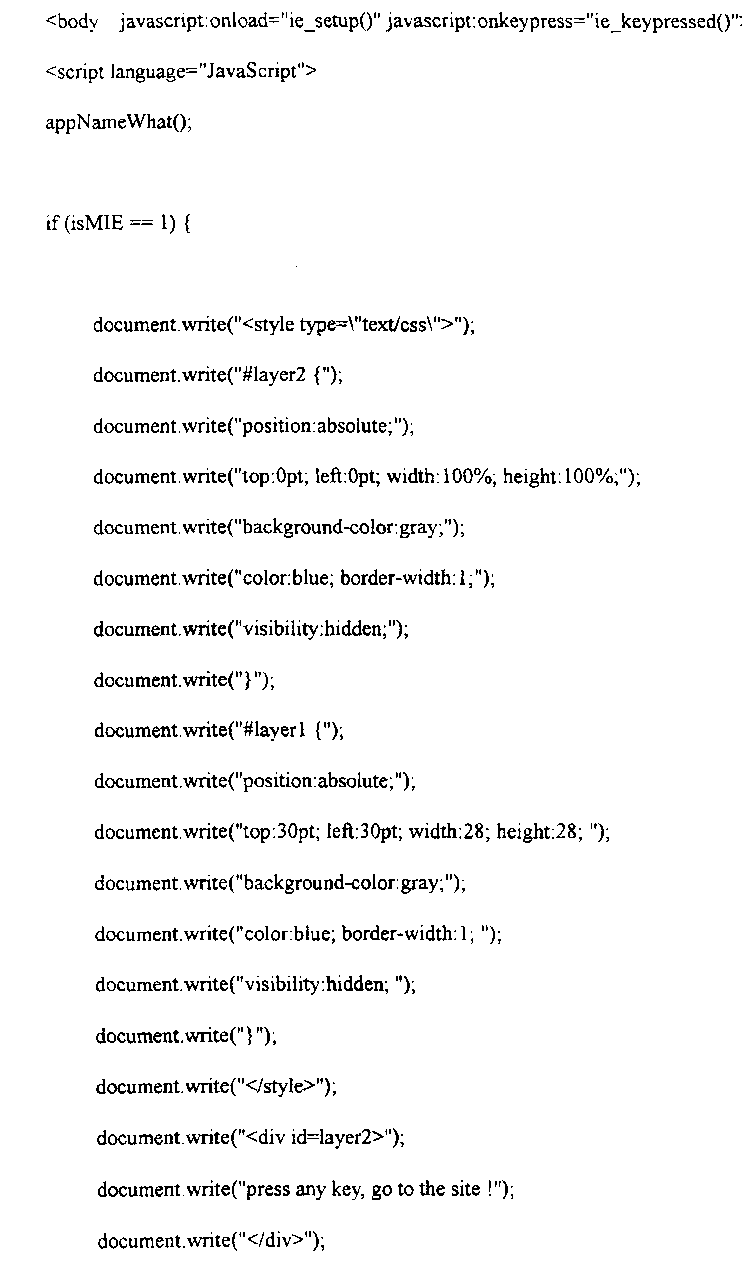

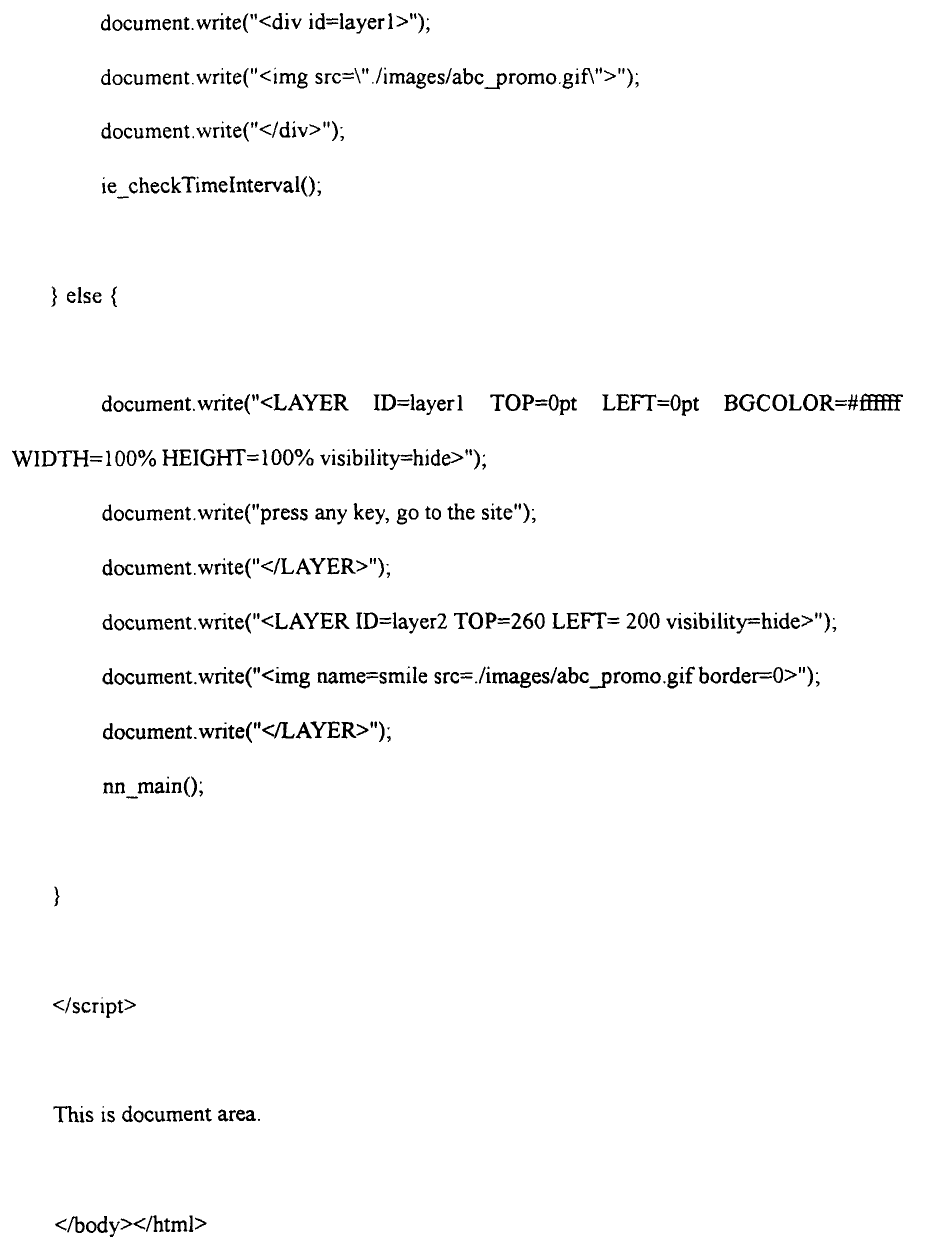

The above code distinguishes the browser type, and is written separatety for each type of the browsers (Netscape and Explorer). Each code contains the logic to check the time period from the user's last action. If the time period reaches the predetermined period, the code calls for a background screen that will cover the user's original browsing window. Advertisements will be presented over the background screen as if the user views the whole page with the advertisement (user cannot view the original content at this stage). The code also contains a logic that can distinguish the user's event type. The code understands two types of user event. The first event is the mouse movement event, which the system interprets as to remove the background screen and the advertisement so that the user will return to the original homepage. The other event is the keyboard press event, which the system interprets as to remove the background screen, and to move the user to a designated homepage.

The script "This is document area" in the code is the original homepage content. Therefore, the present invention can be embedded to any homepages (html format). If the user does not move the mouse for a certain period (while the user is viewing "This is document area"), the user will see an automatic advertisement presented to the user. The user may view the original document, "This is document area", if the user moves the mouse again. Otherwise, if the user presses any key on the keyboard, the user will be moved to a designated web site.

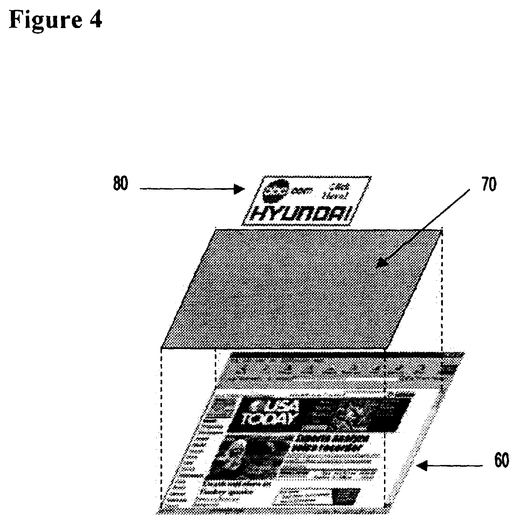

Figure 4 shows an example of the operation of the forced message. Background screen 70 will cover the browser screen 60 to hide the original homepage from the viewer. The background screen 70 may vary in color, size or style to match the advertisement 80 that is displayed above the background screen 70. The advertisement 80 may be of any size and any form, such as, image file, animated file, and/or shockwave file. Its position may vary, and its moving direction may be also controlled to maximize the viewer's attention. As it was indicated in the figure, a full screen can be used for advertising area to maximize the advertising effect.

Next, if the user starts moving the mouse again inside the browser, the background screen 70 and the advertisement 80 will be removed. This technique will guarantee the homepage user to return to the original homepage screen 60.

If the advertisement 80 has a designated homepage address attached, the user may be moved to the specific site upon the user's any keyboard press. In this case, background screen 70 and advertisement content 80 will be removed and the user will be not returned to the original homepage, but the user will be moved to the designated homepage.

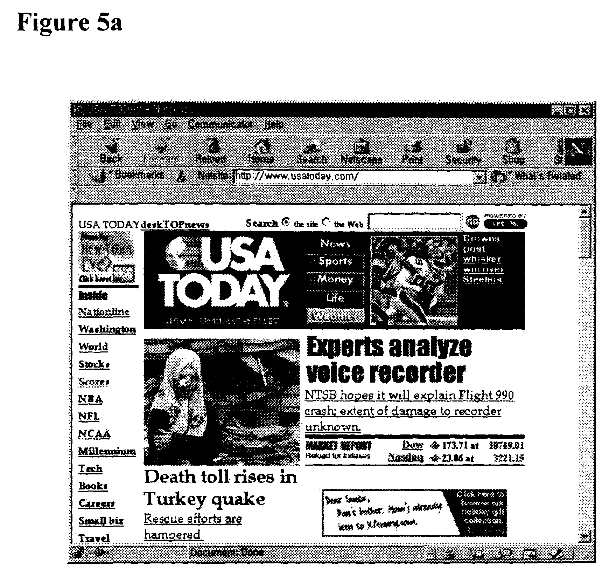

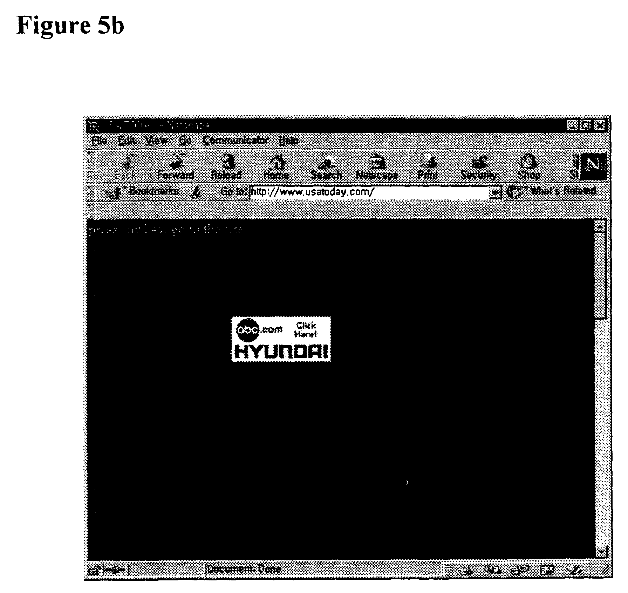

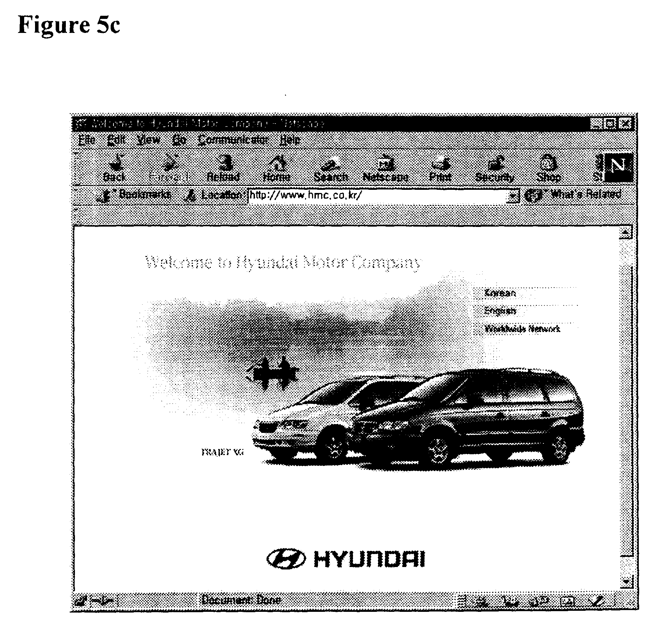

Figure 5a, 5b, and 5c show an actual example in accordance with the present invention. In this scenario, an user is initially viewing the Usatoday homepage using a Netscape navigator (Figure 5a). The FMA prepares to act in the Netscape mode. When the user does not move the mouse for a certain period, the homepage will be covered with Hyundai Motor Company's advertisement (Figure 5b). Hyundai's advertisement asks for a key press for a visit to their homepage in the corner of the advertisement. If the user presses any key, the user will be moved to Hyundai's homepage at Figure 5c. If the user simply moves his mouse, he will be able to see the original homepage again (Figure 5a).

As the present invention may be embodied in several forms without departing from the spirit or essential characteristics thereof, it should also be understood that the above-described embodiment is not limited by any of the details of the foregoing description, unless otherwise specified, but rather should be construed broadly within its spirit and scope as defined in the appended claims, and therefore all changes and modifications that fall within the meets and bounds of the claims, or equivalence of such meets and bounds are therefore intended to be embraced by the appended claims.

## Claims

1. An Internet based advertising system, comprising:
a web browser connecting to a website; and,
a web server of the website which sends a homepage file that a user has requested through URL input or click together with a forced message that the user has not requested when a user connects to the website, wherein the forced message is being capable of
monitoring whether the time from a user's last mouse move or keyboard press has reached a predetermined period, after a user connects to the website on the Internet;
displaying an advertisement content on the current homepage, if the time exceeds the predetermined period;
monitoring whether an event occurs during the advertisement content displaying; and,
terminating the displaying when an event occurs by the user.

2. An Internet based advertising system according to claim 1, wherein the advertisement content is a text, image, animated image, sound, and/or shockwave files.

3. An Internet based advertising system according to claim 1, wherein the advertisement content may appear or disappear in random fashion, or move stay stationary or move to a certain direction in the user's browser.

4. An Internet based advertising system according to claim 1, wherein the forced message is capable of terminating the displaying, of removing the advertisement, and of redisplaying the original web site, when an event occurs by the user.

5. An Internet based advertising system according to claim 4, wherein the event is mouse movement, a mouse click, or a keyboard press.

6. An Internet based advertising system according to claim 1, wherein the advertisement content designates another website.

7. An Internet based advertising system according to claim 6, wherein the forced message is capable of removing the advertisement and moving the user to a designated website, when the event occurs by the user.

8. An Internet based advertising system according to claim 6, wherein the event is mouse movement, a mouse click, or a keyboard press.

9. An Internet based advertising system according to claim 1, wherein the advertisement content may be displayed regardless of the size of the activated browser window or the state of the browser such as a scrolled state of the website and a background state of the browser window.

10. An Internet based advertising system according to claim 1, wherein the forced message is being capable of displaying a background screen on the homepage and an advertisement content on the background screen, if the time exceeds the predetermined period.

11. An Internet based advertising system according to claim 10, wherein the forced message is being capable of displaying a background screen on the homepage in the entire browser window.

12. An Internet based advertising system according to claim 10, wherein the forced message is being capable of displaying a background screen on the homepage in a part of the browser window.

13. An Internet based advertising system according to claim 10, wherein the advertisement content may cover the entire background screen.

14. An Internet based advertising system according to claim 10, wherein the advertisement content may cover a part of the background screen.

15. An Internet based advertising system according to claim 10, wherein the forced message is capable of terminating the displaying and removing the background screen and the advertisement and redisplaying the original web site, when an event occurs by the user.

16. An Internet based advertising system according to claim 15, wherein the event is mouse movement, a mouse click, or a keyboard press.

17. An Internet based advertising system according to claim 10, wherein the advertisement content designates another website.

18. An Internet based advertising system according to claim 17, wherein the forced message is capable of removing the background screen and the advertisement and moving the user to a designated website, when the event occurs by the user.

19. An Internet based advertising system according to claim 17, wherein the event is mouse movement, a mouse click, or a keyboard press.

20. An Internet based advertising system according to claim 10, wherein the background screen and the advertisement content may be displayed regardless of the size of the activated browser window or the state of the browser such as a scrolled state of the website and a background state of the browser window.

21. An Internet based advertising system according to claim 10, wherein the background screen can contain text based advertisement phrases or image based advertisement.
